# EUROPEAN PATENT SPECIFICATION

(11) **EP 3 306 138 B1**
(45) Date of publication and mention of the grant of the patent: **27.05.2020**
(21) Application number: 16771949.1
(22) Date of filing: 19.02.2016
(51) Int. Cl.: F16H 57/027, F16H 57/035, F16H 63/06, F16H 9/18

(54) **BELT TYPE STEPLESS TRANSMISSION**
STUFENLOSES BANDGETRIEBE
TRANSMISSION À VARIATION CONTINUE DU TYPE À COURROIE

(30) Priority: 30.03.2015 JP 2015068193
(43) Date of publication of application: 11.04.2018
(73) Proprietor: Musashi Seimitsu Industry Co., Ltd., Aichi 441-8560 (JP)
(72) Inventor: OKAMOTO, Teruhisa, Toyohashi-shi Aichi 441-8560 (JP)
(74) Representative: Santi, Filippo
(86) International application number: PCT/JP2016/054848
(87) International publication number: WO 2016/158065

(56) References cited:
- JP-A- 2011 033 067
- JP-A- 2011 163 429
- JP-A- 2012 021 609
- JP-A- 2012 026 473
- JP-A- 2013 029 130
- JP-A- 2013 053 730
- JP-U- S5 728 948
- US-A1- 2010 116 087

## Description

### TECHNICAL FIELD

The present invention relates to a belt-type continuously variable transmission, and more specifically to an improvement of a drainage-cum-breather structure for an actuator in a belt-type continuously variable transmission.

### BACKGROUND ART

As disclosed in Patent Document 1 below, a belt-type continuously variable transmission that is mounted on a vehicle and includes a drive pulley supported on a primary shaft, a driven pulley supported on a secondary shaft, a belt wound around the two pulleys, a transmission case housing the two pulleys and the belt, and an actuator mounted on the transmission case and capable of changing the groove width of either one of the drive pulley and the driven pulley is already known.

### RELATED ART DOCUMENTS

### PATENT DOCUMENTS

Patent Document 1: Japanese Patent Application Laid-open No. 2011-33067

### SUMMARY OF THE INVENTION

### PROBLEMS TO BE SOLVED BY THE INVENTION

In the arrangement disclosed in Patent Document 1 above, an output shaft of the actuator mounted on the transmission case engages with an arm member rotatably linked to a movable sheave of the drive pulley, the output shaft moves back and forth in response to a motor within an actuator case being driven, and in response thereto the movable sheave moves back and forth with respect to a fixed sheave, thus changing the winding radius of the V belt. In this arrangement, since the temperature within the actuator case changes rapidly due to heat intermittently generated by the motor, it is desirable to provide a breather passage in the actuator case, but the arrangement disclosed in Patent Document 1 above is not provided with such a passage.

Even when consideration is given to providing such a passage, if the passage merely regulates the pressure within the actuator case, although the passage can be provided at any position of the actuator case, when a function of drainage by discharging moisture generated by condensation, etc. outside the actuator case is anticipated, due to the necessity for reliably discharging water the passage can only be provided at a low position. Moreover, if the downstream end of the passage opens so as to be exposed outside the transmission case, it could allow the entry of water or dirt through the exposed part, and if the opening is disposed at a position where the entry of water or dirt is not allowed, it becomes necessary to use a tube exclusively used for forming a passage up to the opening position, thus causing an increase in the cost and degrading the workability during assembly.

The present invention has been accomplished in light of such circumstances, and it is an object thereof to form a drainage-cum-breather passage in an actuator case by a simple operation and at a low cost, the drainage-cum-breather passage regulating the pressure change within the actuator case due to heat intermittently generated by a motor and enabling moisture generated by condensation, etc. to be discharged outside the actuator case, without using a tube exclusively used for the passage and while preventing water or dirt from entering the actuator case through an opening at the downstream end.

### MEANS FOR SOLVING THE PROBLEMS

In order to attain the above object, according to the present invention, there is provided a belt-type continuously variable transmission mounted on a vehicle and comprising a drive pulley that is supported on a primary shaft, a driven pulley that is supported on a secondary shaft, a belt that is wound around the two pulleys, a transmission case that houses the two pulleys and the belt, and an actuator that is mounted on the transmission case and can change a groove width of either one of the drive pulley and the driven pulley, wherein an actuator case forming an outer shell of the actuator has a fixed portion that opposes a mounting part in the transmission case from an outside and is fixed to the mounting part, a transmission case through hole is formed in the mounting part of the transmission case, the transmission case through hole extending from an interior to an exterior of the transmission case, and an actuator case through hole is formed in the fixed portion of the actuator case, the actuator case through hole extending from an interior to an exterior of the actuator case, and a communication passage is formed in mating faces of the mounting part and the fixed portion by indenting at least one of the mounting part and the fixed portion into a groove shape, the communication passage providing communication between the transmission case through hole and the actuator case through hole, and provides communication between the actuator case and the transmission case via the two through holes and the communication passage.

### (This is a first aspect.)

Further, it is preferable that the transmission case through hole is disposed further to a rear of the vehicle than the actuator case through hole, and the communication passage is inclined upward toward a front of the vehicle. (This is a second aspect.)

Furthermore, it is preferable that an inner bottom wall of the actuator case positioned on a lower side of the vehicle is inclined downward toward the front of the vehicle, and the actuator case through hole is made to open at a position corresponding to a lower end of the inner bottom wall. (This is a third aspect.)

Moreover, it is preferable that the communication passage is formed in the actuator case, and a width of at least a portion, opposing the transmission case through hole, of the communication passage is made larger than a diameter of the transmission case through hole.

### (This is a fourth aspect.)

Further, it is preferable that a rib projecting further inward into the transmission case than an opening of the transmission case through hole is disposed at a position adjacent to the opening within the transmission case on the front side of the vehicle. (This is a fifth aspect.)
Further embodiments of the invention are laid down in the dependent claims.

### EFFECTS OF THE INVENTION

In accordance with the first aspect of the present invention, since the transmission case through hole is formed in the mounting part of the transmission case, the transmission case through hole extending from the interior to the exterior of the transmission case, the actuator case through hole is formed in the fixed portion of the actuator case, the actuator case through hole extending from the interior to the exterior of the actuator case, and the communication passage is formed in the mating faces of the mounting part and the fixed portion by indenting at least one of the mounting part and the fixed portion into a groove shape, the communication passage providing communication between the transmission case through hole and the actuator case through hole, and provides communication between the actuator case and the transmission case via the two through holes and the communication passage, even if the temperature of the interior of the actuator case changes rapidly due to heat intermittently generated by the motor, the pressure within the actuator case can be regulated by means of the drainage-cum-breather passage formed from the two through holes and the communication passage, and moisture generated due to condensation, etc. can be easily discharged outside the actuator case.

Moreover, with regard to the drainage-cum-breather passage, since the downstream end of the breather passage opens within the transmission case and is not exposed outside the transmission case, it is possible to suppress effectively the entrance of water or dirt from the outside and, furthermore, since the labyrinth flow path having two right-angled bends is formed with the through hole on the actuator case side, the through hole on the transmission case side, and the communication passage communicating therewith, it is possible to further suppress the entrance of water or dirt from the outside.

Moreover, since the communication passage is formed in the mating faces of the mounting part and the fixed portion by indenting at least one of the mounting part and the fixed portion into a groove shape, the communication passage can be formed with a simple operation of merely indenting at least one of the mounting part and the fixed portion into a groove shape, and the production cost is also low. Furthermore, since the communication passage may be formed at any position as long as it is in the mating faces of the mounting part and the fixed portion, the degree of freedom in layout of the transmission case through hole and the actuator case through hole increases, and a flow path inclined downward toward the downstream side can easily be formed. Furthermore, since it is not necessary to use a tube exclusively used for the passage, in terms of this point the production cost can be reduced and it can contribute to a smaller size.

Furthermore, in accordance with the second aspect of the present invention, since the transmission case through hole is disposed further to the rear of the vehicle than the actuator case through hole, water within the communication passage can be moved toward the transmission case through hole, which is on the rear side, by means of inertial force when the vehicle is traveling forward, thus avoiding the return of water into the interior of the actuator case via the actuator case through hole. Furthermore, since the communication passage is inclined upward toward the front of the vehicle, the avoidance effect can be further enhanced.

Moreover, in accordance with the third aspect of the present invention, since the inner bottom wall of the actuator case positioned on the lower side of the vehicle is inclined downward toward the front of the vehicle and the actuator case through hole opens at a position corresponding to the lower end of the inner bottom wall, the flow path returning from the communication passage to the inner bottom wall of the actuator case becomes a looped-back structure, thus making it possible to avoid water within the communication passage returning to the interior of the actuator case. Moreover, since the inner bottom wall of the actuator case is inclined downward toward the actuator case through hole, water within the actuator case can be guided easily to the actuator case through hole.

Furthermore, in accordance with the fourth aspect of the present invention, since the communication passage is formed in the actuator case, compared with a case in which the communication passage is formed in the transmission case, any decrease in the strength of the transmission case accompanying machining can be avoided. Moreover, since the width of at least the portion, opposing the transmission case through hole, of the communication passage is made larger than the diameter of the transmission case through hole, it is possible to absorb any displacement between the communication passage and the transmission case through hole when the actuator case is mounted on the transmission case .

Moreover, in accordance with the fifth aspect of the present invention, since the rib projecting further inward into the transmission case than the opening of the transmission case through hole is disposed at a position adjacent to the opening within the transmission case on the front side of the vehicle, even if rainwater, etc. enters the interior of the transmission case via the outside air inlet hole of the transmission case, it is possible to prevent the rainwater, etc. from entering the interior of the transmission case through hole by means of the rib.

### BRIEF DESCRIPTION OF DRAWINGS

[FIG. 1] FIG. 1 is a plan sectional view of a belt-type continuously variable transmission in an embodiment of the present invention. (first embodiment)
[FIG. 2] FIG. 2 is a side view of the belt-type continuously variable transmission in the embodiment of the present invention (view from arrow A2 in FIG. 1). (first embodiment)
[FIG. 3] FIG. 3 is an enlarged view of the part shown by arrow A3 in FIG. 1. (first embodiment)
[FIG. 4] FIG. 4 is a sectional view along line A4-A4 in FIG. 3. (first embodiment)
[FIG. 5] FIG. 5 (A) is a perspective view when a first case half of an actuator is viewed from outside a transmission case, and FIG. 5 (B) is a perspective view when the first case half of the actuator is viewed from the transmission case side. (first embodiment)
[FIG. 6] FIG. 6 is a sectional view along line A6-A6 in FIG. 4. (first embodiment)
[FIG. 7] FIG. 7 is a view when the vicinity of an opening of the transmission case is viewed from inside the transmission case. (first embodiment)

### EXPLANATION OF REFERENCE NUMERALS AND SYMBOLS

- 2: Primary shaft
- 3: Secondary shaft
- 4: Drive pulley
- 5: Driven pulley
- 6: Belt
- 7: Transmission case
- 7a: Transmission case through hole
- 7a': Opening
- 12: Actuator
- 14a: Fixed portion
- 14e: Communication passage (groove-shaped passage)
- 16: Actuator case
- 16a: Actuator case through hole
- 24: Mounting part
- 27a: Inner bottom wall
- 28: Rib
- p: Width of groove-shaped passage
- q: Diameter of transmission case through hole

### MODES FOR CARRYING OUT THE INVENTION

An embodiment of the present invention is explained below by reference to the attached drawings.

### FIRST EMBODIMENT

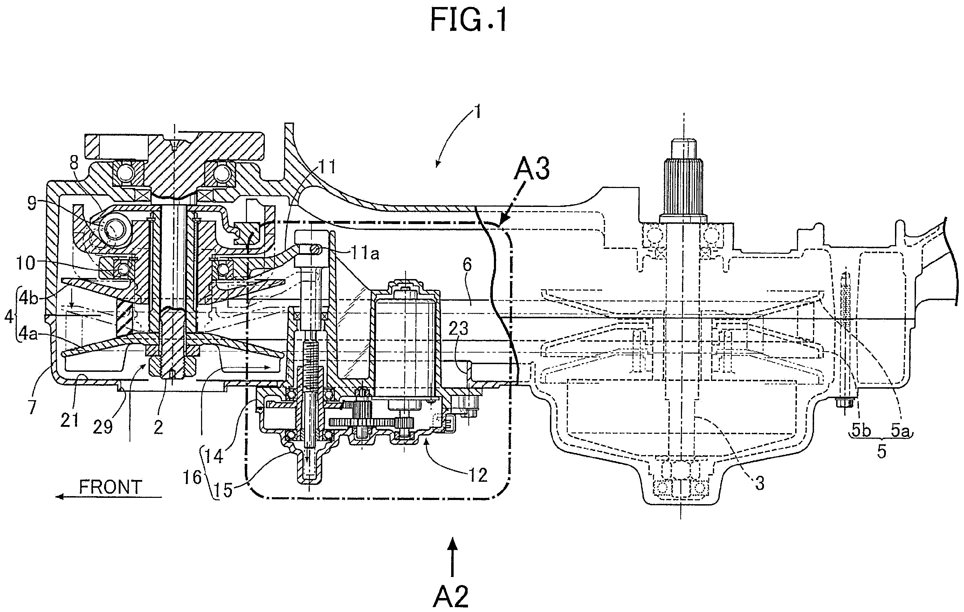

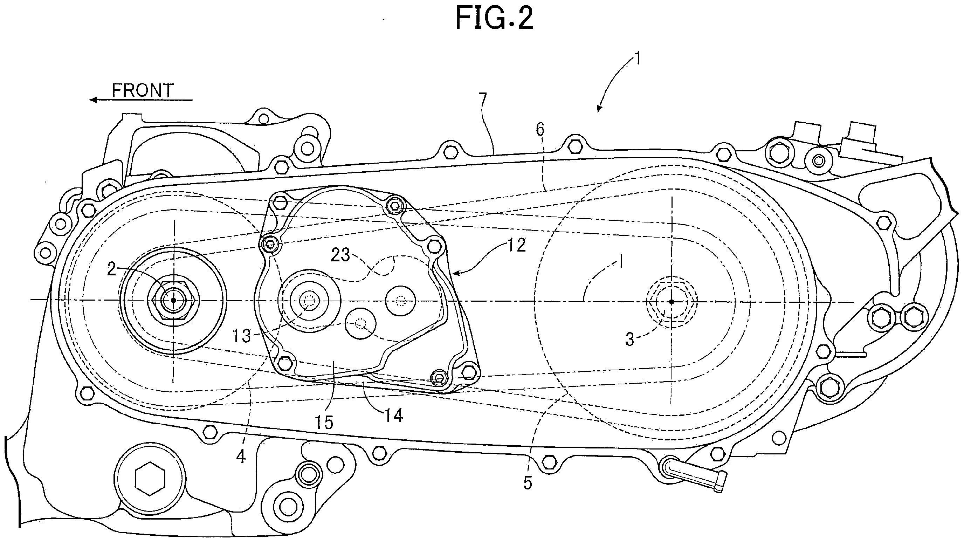

FIG. 1 is a plan sectional view of a belt-type continuously variable transmission related to the present invention, and FIG. 2 is a view in the direction of arrow 2 in Fig. 1.

As shown in FIG. 1, a belt-type continuously variable transmission 1 includes a primary shaft 2 connected to a drive source such as an engine or a motor, which is not illustrated, a secondary shaft 3 parallel to the primary shaft 2 and connected to a wheel, which is not illustrated, a drive pulley 4 supported on the primary shaft 2, a driven pulley 5 supported on the secondary shaft 3, a belt 6 wound around the two pulleys 4 and 5, a transmission case 7 housing the two pulleys 4 and 5 and the belt 6, and an actuator 12 that is mounted on the transmission case 7 and can change the groove width of either one of the drive pulley 4 and the driven pulley 5, and is mounted on a vehicle such as a two-wheeled motor vehicle.

The drive pulley 4 has a drive side fixed sheave 4a fixed to the primary shaft 2, and a drive side movable sheave 4b that is supported on the primary shaft 2 and can move with respect to the drive side fixed sheave 4a. The driven pulley 5 has a driven side fixed sheave 5a fixed to the secondary shaft 3, and a driven side movable sheave 5b that is supported on the secondary shaft 3 and can move with respect to the driven side fixed sheave 5a.

A ramp plate 8 is fixed to the primary shaft 2 behind the drive side movable sheave 4b, and a plurality of centrifugal weights 9 are retained between the drive side movable sheave 4b and the ramp plate 8. When the primary shaft 2 rotates and a centrifugal force corresponding to the rotational speed of the primary shaft 2 acts on the centrifugal weight 9, the centrifugal weight 9 moves radially outward along a cam face of the drive side movable sheave 4b, and the drive side movable sheave 4b is moved toward the drive side fixed sheave 4a side, thus increasing the winding radius of the belt 6.

Furthermore, an arm 11 is relatively rotatably linked to the movable sheave 4b, 5b of one of the two pulleys 4 and 5 (the drive side movable sheave 4b in this embodiment) via a bearing 10. The actuator 12 is connected to the arm 11 so that a hook portion 13a formed on an output shaft 13 of the actuator 12 is engaged with a pin 11a formed on the arm 11, the actuator 12 moving the drive side movable sheave 4b in the axial direction of the primary shaft 2 via the arm 11 and changing the groove width of the drive pulley 4 in cooperation with the centrifugal weight 9.

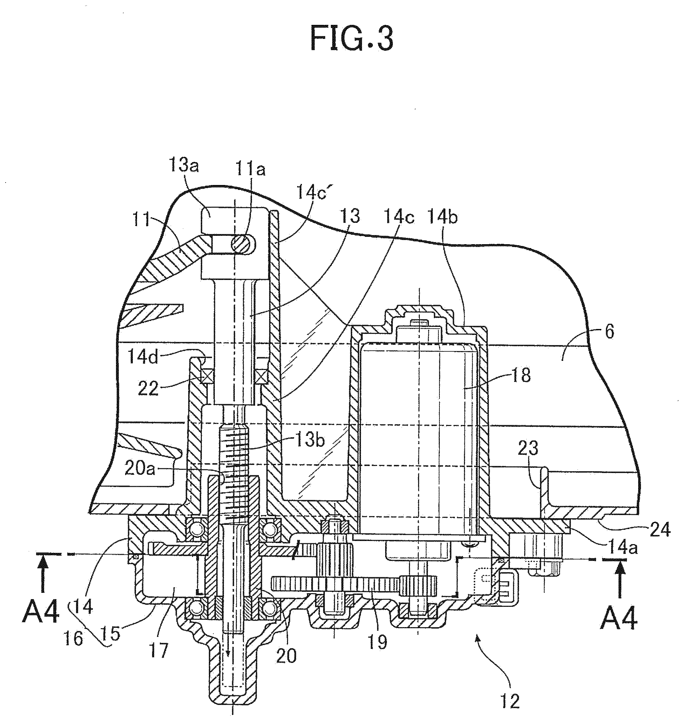

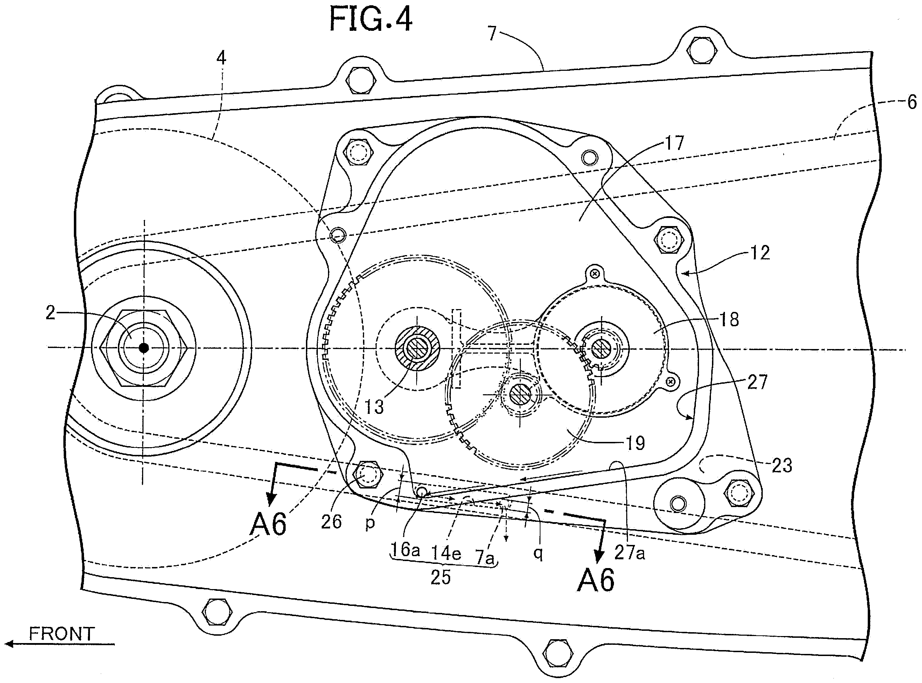

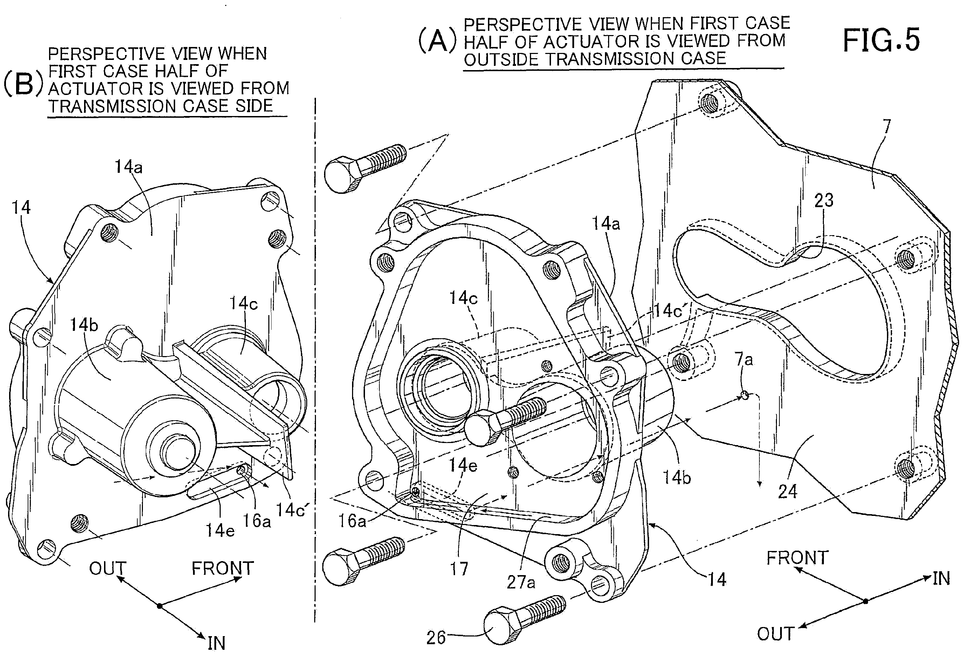

Referring in addition to FIG. 3 to FIG. 5, the actuator 12 includes an actuator case 16 formed from a first case half 14 and a second case half 15 (in FIG. 4 and FIG. 5 only the first case half 14 is shown). The first case half 14 has a fixed portion 14a that defines a flat housing space 17 between itself and the second case half 15 and is mounted on a mounting part 24 of the transmission case 7 by means of a bolt 26, and a bulge portion 14b bulging from the fixed portion 14a toward the interior of the transmission case 7. A motor 18, which is a drive source, is disposed within the bulge portion 14b. Furthermore, disposed within the housing space 17 are a reduction gear mechanism 19 that decreases the speed of the output of the motor 18 and a nut member 20 that is rotatingly driven by the motor 18 via the reduction gear mechanism 19.

A female thread 20a is formed on the inner periphery of the nut member 20. The output shaft 13, which has a male thread 13b that meshes with the female thread 20a, is slidably supported on a support tube 14c bulging in the same direction as that of the bulge portion 14b from the fixed portion 14a of the first case half 14 and projects outside the support tube 14c. Due to the nut member 20 being subjected to rotation of the motor 18 and rotating, the output shaft 13 moves back and forth along the axis of the nut member 20. Because of this, a plate-shaped portion 14c' for preventing rotation of the output shaft 13 by making contact with the back face of the hook portion 13a is projectingly provided at the extremity of the support tube 14c, but the mechanism for preventing rotation of the output shaft 13 is not limited to the above.

When the output shaft 13 moves back and forth due to rotation of the nut member 20, in order to transmit the back and forth movement of the output shaft 13 to the arm 11, the hook portion 13a formed at the extremity of the output shaft 13 has a squared U-shaped form so that the pin 11a of the arm 11 engages with a cavity between parallel parts of the hook portion 13a. Furthermore, an opening 14d at the extremity of the support tube 14c through which the output shaft 13 extends is sealed by a seal member 22 so that dirt, etc. is prevented from entering the interior of the actuator case 16.

Formed in the transmission case 7 is an opening 23 via which the bulge portion 14b and the support tube 14c are inserted into the transmission case 7 so as to engage the hook portion 13a of the output shaft 13 with the pin 11a of the arm 11. Furthermore, the fixed portion 14a of the first case half 14 protrudes further outward than the housing space 17, and when the actuator 12 is mounted on the transmission case 7, the fixed portion 14a opposes the mounting part 24 of the transmission case 7 from the outside and abuts against the mounting part 24.

With regard to the actuator 12, it is desirable for the actuator case 16 to be provided with a breather passage since the temperature within the actuator case 16, which forms an outer shell of the actuator 12, changes rapidly due to heat intermittently generated by the motor 18. However, if such a breather passage were exposed to the outside of the transmission case 7 through a wall face of the actuator case 16, it would allow water or dirt to enter via the exposed part of the breather passage.

In the present embodiment, as shown in FIG. 4, FIG. 5, and FIG. 6, a transmission case through hole 7a extending from the interior to the exterior of the transmission case 7 is formed in the mounting part 24 of the transmission case 7, and an actuator case through hole 16a extending from the interior to the exterior of the actuator case 16 is formed in a portion, corresponding to the housing space 17, of the fixed portion 14a of the actuator case 16. Furthermore, in the mating faces of the mounting part 24 and the fixed portion 14a, a groove-shaped passage 14e is formed in the fixed portion 14a, one end of the actuator case through hole 16a opening in the groove-shaped passage 14e. As shown in FIG. 4, the groove-shaped passage 14e opposes one end of the transmission case through hole 7a in a state in which the actuator case 16 is mounted on the transmission case 7, providing communication between the transmission case through hole 7a and the actuator case through hole 16a. Because of this, it is possible, with the two through holes 7a and 16a and the groove-shaped passage 14e, to form a drainage-cum-breather passage 25 that regulates the pressure within the actuator case 16 and discharges water within the actuator case 16 to the interior of the transmission case 7.

In this arrangement, as shown in FIG. 4, a width p of at least a portion of the groove-shaped passage 14e that opposes the transmission case through hole 7a is made larger than a diameter q of the transmission case through hole 7a, thus absorbing any displacement between the groove-shaped passage 14e and the transmission case through hole 7a when the actuator case 16 is mounted on the transmission case 7.

The groove-shaped passage 14e may be provided in the transmission case 7 or may be provided in both the actuator case 16 and the transmission case 7 so that they are superimposed in a mounted state. The groove-shaped passage 14e is one example of the communication passage.

Furthermore, the transmission case through hole 7a is disposed further to the rear of the vehicle than the actuator case through hole 16a, and water within the groove-shaped passage 14e can be moved toward the transmission case through hole 7a side, which is to the rear, by means of inertial force when the vehicle is traveling forward. Because of this, it is possible to avoid water returning to the interior of the actuator case 16 via the actuator case through hole 16a. Moreover, since the groove-shaped passage 14e is inclined upward toward the front of the vehicle, the avoidance effect can be further enhanced.

Furthermore, as shown in FIG. 4 and FIG. 5, an inner wall 27 of the actuator case 16 defining the housing space 17 has an inner bottom wall 27a positioned on the lower side of the vehicle when the actuator case 16 is mounted on the transmission case 7. The inner bottom wall 27a is inclined downward toward the front of the vehicle and has the actuator case through hole 16a opening at a position corresponding to the lower end of the inner bottom wall 27a.

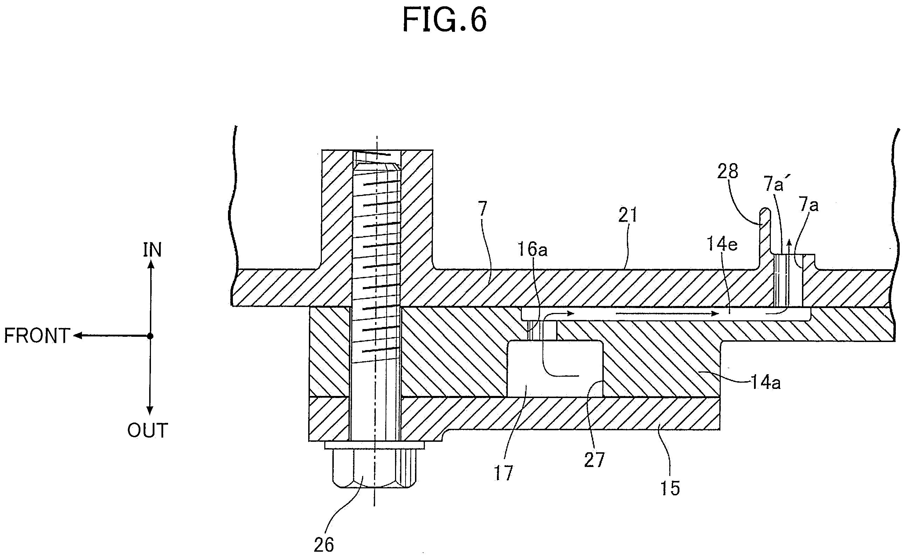

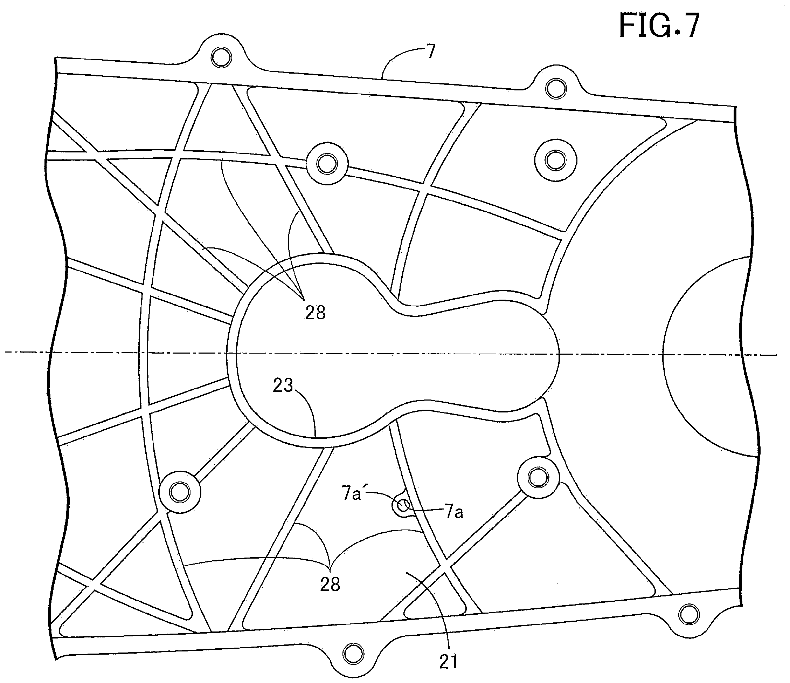

Moreover, as shown in FIG. 6 and FIG. 7, a plurality of ribs 28 projecting from the inner wall 21 of the transmission case 7 are formed within the transmission case 7. Due to one rib 28 thereof being adjacent to an opening 7a' of the transmission case through hole 7a in the vehicle front side and projecting further into the transmission case 7 than the opening 7a', rainwater, etc. that has entered via an outside air inlet hole 29 (see FIG. 1) of the transmission case 7 is prevented from entering the interior of the transmission case through hole 7a.

The operation of the present embodiment is now explained.

The transmission case through hole 7a extending from the interior to the exterior of the transmission case 7 is formed in the mounting part 24 of the transmission case 7, and the actuator case through hole 16a extending from the interior to the exterior of the actuator case 16 is formed in the portion, corresponding to the housing space 17, of the fixed portion 14a of the actuator case 16. Furthermore, in the mating faces of the mounting part 24 and the fixed portion 14a, the groove-shaped passage 14e is formed in the fixed portion 14a, one end of the actuator case through hole 16a opening in groove-shaped passage 14e. Moreover, the groove-shaped passage 14e is made to oppose one end of the transmission case through hole 7a in a state in which the actuator case 16 is mounted on the transmission case 7, thus forming the drainage-cum-breather passage 25 providing communication between the interior of the actuator case 16 and the interior of the transmission case 7. Because of this, even if the temperature of the interior of the actuator case 16 changes rapidly due to heat intermittently generated by the motor 18, the pressure within the actuator case 16 can be regulated by means of the drainage-cum-breather passage 25 formed from the two through holes 7a and 16a and the groove-shaped passage 14e, and moisture generated due to condensation, etc. can be easily discharged outside the actuator case 16.

Moreover, with regard to the drainage-cum-breather passage 25, since the opening 7a', which is the downstream end of the breather passage 25, opens within the transmission case 7 and is not exposed outside the transmission case 7, it is possible to suppress effectively the entrance of water or dirt from the outside. Furthermore, since the drainage-cum-breather passage 25 forms a labyrinth flow path having two right-angled bends with the through hole 16a on the actuator case 16 side, the through hole 7a on the transmission case 7 side, and the groove-shaped passage 14e communicating therewith, it is possible to suppress the entrance of water or dirt from the outside.

Moreover, since the groove-shaped passage 14e is formed in the mating faces of the mounting part 24 and the fixed portion 14a by indenting at least one of the mounting part 24 and the fixed portion 14a into a groove shape, the groove-shaped passage 14e can be formed with a simple operation of merely indenting at least one of the mounting part 24 and the fixed portion 14a into a groove shape, and the production cost is also low. Furthermore, since the groove-shaped passage 14e may be formed at any position as long as it is in the mating faces of the mounting part 24 and the fixed portion 14a, the degree of freedom in layout of the transmission case through hole 7a and the actuator case through hole 16a increases, and a flow path inclined downward toward the downstream side can easily be formed. Furthermore, since it is not necessary to use a tube exclusively used for the breather passage, in terms of this point the production cost can be reduced and it can contribute to a smaller size.

Moreover, since the transmission case through hole 7a is disposed further to the rear of the vehicle than the actuator case through hole 16a, water within the groove-shaped passage 14e can be moved toward the transmission case through hole 7a, which is on the rear side, by means of inertial force when the vehicle is traveling forward, thus avoiding the return of water into the interior of the actuator case 16 via the actuator case through hole 16a. Furthermore, since the groove-shaped passage 14e is inclined upward toward the front of the vehicle, the avoidance effect can be further enhanced.

Moreover, since the inner bottom wall 27a of the actuator case 16 is inclined downward toward the front of the vehicle and the actuator case through hole 16a opens at a position corresponding to the lower end of the inner bottom wall 27a, the flow path returning from the groove-shaped passage 14e to the inner bottom wall 27a of the actuator case 16 becomes a looped-back structure, thus making it possible to avoid water within the groove-shaped passage 14e returning to the interior of the actuator case 16. Moreover, since the inner bottom wall 27a of the actuator case 16 is inclined downward toward the actuator case through hole 16a, water within the actuator case 16 can be guided easily to the actuator case through hole 16a.

Furthermore, since the groove-shaped passage 14e is formed in the actuator case 16, compared with a case in which the groove-shaped passage 14e is formed in the transmission case 7, any decrease in the strength of the transmission case 7 accompanying machining can be avoided. Moreover, since the width of at least the portion, opposing the transmission case through hole 7a, of the groove-shaped passage 14e is made larger than the diameter of the transmission case through hole 7a, it is possible to absorb any displacement between the groove-shaped passage 14e and the transmission case through hole 7a when the actuator case 16 is mounted on the transmission case 7.

Furthermore, since in general the interior of the transmission case 7 is formed so that outside air introduced via the outside air inlet hole 29 provided in the vehicle front side is exhausted from the vehicle rear side to thus allow the heat within the transmission case 7 to escape, water might enter the interior of the transmission case 7 via the outside air inlet hole 29. However, in the present embodiment, since the plurality of ribs 28 projecting from the inner wall 21 of the transmission case 7 are formed within the transmission case 7, and one of the ribs 28 is adjacent to the opening 7a' of the transmission case through hole 7a on the vehicle front side and projects into the transmission case 7 further than the opening 7a', even if rainwater, etc. enters the interior of the transmission case 7 via the outside air inlet hole 29 of the transmission case 7, it is possible to prevent the rainwater, etc. from entering the interior of the transmission case through hole 7a by means of the rib 28.

An embodiment of the present invention is explained above, however the present invention is not limited to the above embodiment but it is defined by the claims.

For example, the belt-type continuously variable transmission of the present invention is not limited to one mounted on a two-wheeled motor vehicle and may be used in a vehicle of any configuration.

## Claims

1. A belt-type continuously variable transmission mounted on a vehicle and comprising a drive pulley (4) that is supported on a primary shaft (2), a driven pulley (5) that is supported on a secondary shaft (3), a belt (6) that is wound around the two pulleys (4, 5), a transmission case (7) that houses the two pulleys (4, 5) and the belt (6), and an actuator (12) that is mounted on the transmission case (7) and can change a groove width of either one of the drive pulley (4) and the driven pulley (5),
wherein an actuator case (16) forming an outer shell of the actuator (12) has a fixed portion (14a) that opposes a mounting part (24) of the transmission case (7) from an outside and is fixed to the mounting part (24),
**characterized in that** a transmission case through hole (7a) is formed in the mounting part (24) of the transmission case (7), the transmission case through hole (7a) extending from an interior to an exterior of the transmission case (7), and an actuator case through hole (16a) is formed in the fixed portion (14a) of the actuator case (16), the actuator case through hole (16a) extending from an interior to an exterior of the actuator case (16), and
a communication passage (14e) is formed in mating faces of the mounting part (24) and the fixed portion (14a) by indenting at least one of the mounting part (24) and the fixed portion (14a) into a groove shape, the communication passage (14e) providing communication between the transmission case through hole (7a) and the actuator case through hole (16a), and provides communication between the actuator case (16) and the transmission case (7) via the two through holes (7a, 16a) and the communication passage (14e).

2. The belt-type continuously variable transmission according to Claim 1, wherein the transmission case through hole (7a) is disposed further to a rear of the vehicle than the actuator case through hole (16a), and the communication passage (14e) is inclined upward toward a front of the vehicle.

3. The belt-type continuously variable transmission according to Claim 2, wherein an inner bottom wall (27a) of the actuator case (16) positioned on a lower side of the vehicle is inclined downward toward the front of the vehicle, and the actuator case through hole (16a) is made to open at a position corresponding to a lower end of the inner bottom wall (27a).

4. The belt-type continuously variable transmission according to Claim 1, wherein the communication passage (14e) is formed in the actuator case (16), and a width (p) of at least a portion, opposing the transmission case through hole (7a), of the communication passage (14e) is made larger than a diameter (q) of the transmission case through hole (7a).

5. The belt-type continuously variable transmission according to Claim 2, wherein the communication passage (14e) is formed in the actuator case (16), and a width (p) of at least a portion, opposing the transmission case through hole (7a), of the communication passage (14e) is made larger than a diameter (q) of the transmission case through hole (7a).

6. The belt-type continuously variable transmission according to Claim 3, wherein the communication passage (14e) is formed in the actuator case (16), and a width (p) of at least a portion, opposing the transmission case through hole (7a), of the communication passage (14e) is made larger than a diameter (q) of the transmission case through hole (7a).

7. The belt-type continuously variable transmission according to any one of Claim 1 to Claim 6, wherein a rib (28) projecting further inward into the transmission case (7) than an opening (7a') of the transmission case through hole (7a) is disposed at a position adjacent to the opening (7a') within the transmission case (7) on the front side of the vehicle.

## Patentansprüche

1. Stufenlos variables Riemengetriebe, das an einem Fahrzeug befestigt ist und eine Antriebsriemenscheibe (4), die an einer primären Welle (2) gehalten wird, eine angetriebene Riemenscheibe (5), die an einer sekundären Welle (3) gehalten wird, einen Riemen (6), der um die zwei Riemenscheiben (4, 5) gewunden ist, ein Getriebegehäuse (7), das die zwei Riemenscheiben (4, 5) und den Riemen (6) beherbergt, und einen Aktor (12), der an dem Getriebegehäuse (7) befestigt ist und eine Kerbenbreite von sowohl der Antriebsriemenscheibe (4) als auch der angetriebenen Riemenscheibe (5) verändern kann, umfasst,
wobei ein Aktorgehäuse (16), das eine Außenhülle des Aktors (12) bildet, einen fixierten Abschnitt (14a) aufweist, der einem Befestigungsteil (24) des Getriebegehäuses (7) von einer Außenseite aus gegenüberliegt und an dem Befestigungsteil (24) fixiert ist,
**dadurch gekennzeichnet, dass** ein Getriebegehäusedurchgangsloch (7a) in dem Befestigungsteil (24) des Getriebegehäuses (7) gebildet ist, wobei das Getriebegehäusedurchgangsloch (7a) sich von einer Innenseite zu einer Außenseite des Getriebegehäuses (7) erstreckt, und ein Aktorgehäusedurchgangsloch (16a) in dem fixierten Abschnitt (14a) des Aktorgehäuses (16) gebildet ist, wobei das Aktorgehäusedurchgangsloch (16a) sich von einer Innenseite zu einer Außenseite des Aktorgehäuses (16) erstreckt, und
ein Verbindungsdurchlass (14e) in Gegenflächen des Befestigungsteils (24) und dem fixierten Abschnitt (14a) gebildet ist, indem mindestens einer des Befestigungsteils (24) und des fixierten Abschnitts (14a) in eine Kerbenform eingedellt wird, wobei der Verbindungsdurchlass (14e) Verbindung zwischen dem Getriebegehäusedurchgangsloch (7a) und dem Aktorgehäusedurchgangsloch (16a) bereitstellt, und Verbindung zwischen dem Aktorgehäuse (16) und dem Getriebegehäuse (7) über die zwei Durchgangslöcher (7a, 16a) und den Verbindungsdurchlass (14e) bereitstellt.

2. Stufenlos variables Riemengetriebe nach Anspruch 1, wobei das Getriebegehäusedurchgangsloch (7a) weiter hinten von dem Fahrzeug angeordnet ist als das Aktorgehäusedurchgangsloch (16a) und der Verbindungsdurchlass (14e) nach oben zu einer Vorderseite des Fahrzeugs geneigt ist.

3. Stufenlos variables Riemengetriebe nach Anspruch 2, wobei eine Innenbodenwand (27a) des Aktorgehäuses (16), die an einer Unterseite des Fahrzeugs positioniert ist, nach unten zu der Vorderseite des Fahrzeugs geneigt ist und das Aktorgehäusedurchgangsloch (16a) gestaltet ist, sich bei einer Position entsprechend einem unteren Ende der Innenbodenwand (27a) zu öffnen.

4. Stufenlos variables Riemengetriebe nach Anspruch 1, wobei der Verbindungsdurchlass (14e) in dem Aktorgehäuse (16) gebildet ist und eine Breite (p) von mindestens einem Abschnitt, der dem Getriebegehäusedurchgangsloch (7a) gegenüberliegt, des Verbindungsdurchlasses (14e) größer als ein Durchmesser (q) des Getriebegehäusedurchgangslochs (7a) gestaltet ist.

5. Stufenlos variables Riemengetriebe nach Anspruch 2, wobei der Verbindungsdurchlass (14e) in dem Aktorgehäuse (16) gebildet ist und eine Breite (p) von mindestens einem Abschnitt, der dem Getriebegehäusedurchgangsloch (7a) gegenüberliegt, des Verbindungsdurchlasses (14e) größer als ein Durchmesser (q) des Getriebegehäusedurchgangslochs (7a) gestaltet ist.

6. Stufenlos variables Riemengetriebe nach Anspruch 3, wobei der Verbindungsdurchlass (14e) in dem Aktorgehäuse (16) gebildet ist und eine Breite (p) von mindestens einem Abschnitt, der dem Getriebegehäusedurchgangsloch (7a) gegenüberliegt, des Verbindungsdurchlasses (14e) größer als ein Durchmesser (q) des Getriebegehäusedurchgangslochs (7a) gestaltet ist.

7. Stufenlos variables Riemengetriebe nach einem der Ansprüche 1 bis 6, wobei eine Rippe (28), die weiter nach innen in das Getriebegehäuse (7) vorragt als eine Öffnung (7a') des Getriebegehäusedurchgangslochs (7a), an einer Position angeordnet ist, die an die Öffnung (7a') innerhalb des Getriebegehäuses (7) an der Vorderseite des Fahrzeugs angrenzt.

## Revendications

1. Transmission à variation continue de type à courroie montée sur un véhicule et comprenant une poulie d'entraînement (4) qui est supportée sur un arbre primaire (2), une poulie entraînée (5) qui est supportée sur un arbre secondaire (3), une courroie (6) qui est enroulée autour des deux poulies (4, 5), un carter de transmission (7) qui abrite les deux poulies (4, 5) et la courroie (6), et un actionneur (12) qui est monté sur le carter de transmission (7) et peut changer une largeur de rainure de l'une de la poulie d'entraînement (4) et de la poulie entraînée (5),
dans laquelle un carter d'actionneur (16) formant une enveloppe externe de l'actionneur (12) a une partie fixe (14a) opposée à une section de montage (24) du carter de transmission (7) à partir d'un extérieur et est fixée à la section de montage (24),
**caractérisée en ce qu'**un trou traversant de carter de transmission (7a) est formé dans la section de montage (24) du carter de transmission (7), le trou traversant de carter de transmission (7a) s'étendant entre un intérieur et un extérieur du carter de transmission (7), et un trou traversant de carter d'actionneur (16a) est formé dans la partie fixe (14a) du carter d'actionneur (16), le trou traversant de carter d'actionneur (16a) s'étendant entre un intérieur et un extérieur du carter d'actionneur (16), et
un passage de communication (14e) est formé dans des surfaces d'adaptation de la section de montage (24) et de la partie fixe (14a) en échancrant au moins une de la section de montage (24) et de la partie fixe (14a) dans une forme de rainure, le passage de communication (14e) fournissant une communication entre le trou traversant de carter de transmission (7a) et le trou traversant de carter d'actionneur (16a), et fournissant une communication entre le carter d'actionneur (16) et le carter de transmission (7) par l'intermédiaire des deux trous traversants (7a, 16a) et du passage de communication (14e).

2. Transmission à variation continue de type à courroie selon la revendication 1, dans laquelle le trou traversant de carter de transmission (7a) est disposé plus en arrière du véhicule que le trou traversant de carter d'actionneur (16a), et le passage de communication (14e) est incliné vers le haut vers un avant du véhicule.

3. Transmission à variation continue de type à courroie selon la revendication 2, dans laquelle une paroi inférieure interne (27a) du carter d'actionneur (16) positionnée sur un côté inférieur du véhicule est inclinée vers le bas vers l'avant du véhicule, et le trou traversant de carter d'actionneur (16a) est conçu pour s'ouvrir au niveau d'une position correspondant à une extrémité inférieure de la paroi inférieure interne (27a).

4. Transmission à variation continue de type à courroie selon la revendication 1, dans laquelle le passage de communication (14e) est formé dans le carter d'actionneur (16), et une largeur (p) d'au moins une partie, opposée au trou traversant de carter de transmission (7a), du passage de communication (14e) est rendue plus grande qu'un diamètre (q) du trou traversant de carter de transmission (7a).

5. Transmission à variation continue de type à courroie selon la revendication 2, dans laquelle le passage de communication (14e) est formé dans le carter d'actionneur (16), et une largeur (p) d'au moins une partie, opposée au trou traversant de carter de transmission (7a), du passage de communication (14e) est rendue plus grande qu'un diamètre (q) du trou traversant de carter de transmission (7a).

6. Transmission à variation continue de type à courroie selon la revendication 3, dans laquelle le passage de communication (14e) est formé dans le carter d'actionneur (16), et une largeur (p) d'au moins une partie, opposée au trou traversant de carter de transmission (7a), du passage de communication (14e) est rendue plus grande qu'un diamètre (q) du trou traversant de carter de transmission (7a).

7. Transmission à variation continue de type à courroie selon l'une quelconque des revendications 1 à 6, dans laquelle une nervure (28) faisant saillie plus vers l'intérieur dans le carter de transmission (7) qu'une ouverture (7a') du trou traversant de carter de transmission (7a) est placée au niveau d'une position adjacente à l'ouverture (7a') à l'intérieur du carter de transmission (7) sur le côté avant du véhicule.
